# EUROPEAN PATENT SPECIFICATION

(11) **EP 2 686 174 B1**
(45) Date of publication and mention of the grant of the patent: **25.03.2015**
(21) Application number: 12709422.5
(22) Date of filing: 24.02.2012
(51) Int. Cl.: B60C 7/18, B60C 7/22

(54) **NON-PNEUMATIC TIRE WITH ANNULAR SPOKE REINFORCEMENT**
LUFTLOSER REIFEN MIT RINGFÖRMIGER SPEICHENVERSTÄRKUNG
PNEU NON PNEUMATIQUE AVEC RENFORCEMENT ANNULAIRE DES RAYONS

(30) Priority: 18.03.2011 US 201113051162
(43) Date of publication of application: 22.01.2014
(73) Proprietor: Chemtura Corporation, Middlebury, CT 06749 (US)
(72) Inventor: PALINKAS, Richard, Northfield, CT 06778 (US); LASKOWITZ, Ian, Woodbury, CT 06798 (US); TOPAR, Andrew, Fairfield, CT 06824 (US)
(74) Representative: Beacham, Annabel Rose
(86) International application number: PCT/US2012/026554
(87) International publication number: WO 2012/128892

(56) References cited:
- EP-A1- 2 177 375
- US-A1- 2009 211 674
- US-A1- 2010 132 865
- US-A1- 2011 011 506
- US-B1- 6 615 885

## Description

### FIELD

This invention generally relates to non-pneumatic tires having compression spokes, and is specifically concerned with a non-pneumatic tire having an annular, spoke-reinforcing web that reduces the bending of the spokes and reduces stresses and strains in the tire.

### BACKGROUND

Off-the-road (OTR) vehicles, also known as off-highway vehicles, are commonly used in rugged terrain for mining, excavation, construction, military applications, and other heavy industrial applications. OTR vehicles include tractors, trucks, loaders, dozers, graters, excavators, etc., and may have operational weights as high as 380 to 460 tons. Typically such OTR vehicles have several inflatable tires made of rubber. These applications require that each tire have properties such as being puncture-resistant, able to carry relatively heavy loads, and good resistance to wear and tear. Conventional inflatable tires generally have short operational life spans of about six months. Further, the typical rugged operating environment for OTR vehicles exposes the tires to possible failures, such as punctures, blowouts, tears, and separation of the tire from the rim. Thus, the time and cost to maintain such OTR vehicles increases because the inflatable tires need to be replaced due to normal wear and tire failure. For mining vehicles for example, shortages of suitable replacement tires may cause a mine operator to shut down production while waiting for new replacement tires. This may cause particular hardships for remotely located mines that receive sporadic or irregular shipments of new supplies.

One solution to these problems is to use a solid non-pneumatic tire. Urethane elastomers have been used in the manufacture of solid tires for such applications as industrial tires, off-the-road tires, bicycles tires, etc. Urethane solid tires, however, have not been entirely satisfactory in such applications because they do not have desirable cushioning and handling characteristics. Also, such solid tires suffer from internal heat build-up and subsequent degradation of the elastomer material in prolonged high speed service conditions or under rough terrain situations where the tire is being deformed

Various non-pneumatic tire designs have been proposed to overcome these limitations of pneumatic tires and solid non-pneumatic tires. Some designs have cavities formed into the sidewall, such as those described in International Publications WO2008/009042 and WO97/18959, U.S. Publication No. 2007/0215259, U.S. Patent Nos. 7,174,936, 5,676,900, 5,343,916, 5,223,599, 5,139,066, 5,023,040, 4,921,029, 4,784,201 and EP Publication 0399383. These cavities may be elongated and radially aligned such that they define a plurality of integrally-formed spokes in the tire. Such spokes can maintain the compressive strength of the tire while providing a larger surface area for heat transfer to the surrounding air. Such spokes can also enhance traction and provide desirable cushioning and handling characteristics if properly designed and integrated with an outside tread design.

Further non-pneumatic tires according to the preamble of claim 1 are known from US 2010/0132865 and EP 2177375.

### SUMMARY

Unfortunately, the provision of such spoke-defining cavities in the side walls of non-pneumatic tires does not completely solve all of the aforementioned problems. Specifically, while the central web of the tire provides good compressive strength in the middle of the tread groove region of the tire at high loads, the applicants have observed that the spokes of such tires may flex in an "S" shaped bending pattern in response to such high loads, the flexing being the most pronounced at the side walls of the tire. The resulting footprint of the tire is rendered nonuniform, with the center portion of the tire tread engaging the ground substantially more than the outer sides of the tire tread, causing higher ground pressure, faster wear, and quicker fatigue failure. Worse still, the rapid flexing and bending of the spokes as the tire rotates generates stress, strain and excessive heat which can degrade the urethane polymer that such tires are typically formed from.

The invention solves the aforementioned problems with the provision of an annular reinforcing web that interconnects the spokes and increases their bending stiffness, thereby causing the spokes to compress more before bending.

More specifically, the non-pneumatic tire of the invention includes an inner hoop member having an inner surface that defines the inner diameter of the tire, an outer hoop member having a tread groove region that defines the outer diameter of the tire, and a central web that connects the inner and outer hoop members. A plurality of elongated, radially aligned cavities on either side of the central web defines integrally-formed spokes which connect the inner and outer hoop members. The annular reinforcing web is located on and affixed to either side of a disc-shaped central portion of the central web and interconnects each spoke to the spokes on either side of it thereby rigidifying the spokes. The resulting extra rigidity advantageously causes each spoke to compress more in response to a load before bending, thereby increasing the maximum load that the tire can bear and decreasing the amount of bending of the spokes.

The annular web is preferably connected to the spokes at a point between about 55% and 80% of their radial extent as measured in the direction from said inner to the outer hoop member, and is more preferably connected to the spokes at a point between about 60% and 75% of their radial extent. Such a connection point provides bending strength in the spokes where it is needed most, which is near the outer hoop member where the spokes are most apt to flex in response to a high compressive load.

The annular reinforcing web may be reinforced with fiber webbings on its outer side for added strength. The fiber webbing may take the form of discrete, circular cables made from nylon, aramid, polyester, carbon or steel positioned around the outer edges the reinforcing web. Such cables may be directly integrated into the outer edges of the reinforcing web during the tire fabrication process when the polyurethane (or other tire-forming polymer) is cast in a mold. Alternatively, the fiber webbing may be formed from circumferentially-oriented reinforcing fibers that are integrated into the polymer forming the outer edges of the annular reinforcing web.

Finally, the central web of the tire includes a disc shaped mid portion that is preferably between about 3% and 15% of the overall width of the tire. The area of the spokes on either side of the tire may be between about 30% and 50% of the total area of the sidewall of the tire. The spoke length/width ratio, (the slenderness ratio) is preferably greater than 2.5 to allow buckling under extreme point loading e.g. tire running over an obstruction. The ratio of the radial length/width of the mid portion of the central web (i.e. slenderness ratio of the central web 14) is also preferably greater than 2.5. The inner and outer hoop members, the central web, spokes and annular web are preferably integrally formed and connected together by, for example, a casting or molding process.

### BRIEF DESCRIPTION OF THE DRAWINGS

Figure 1 is a perspective view of the non-pneumatic tire of the invention;
Figure 2 is a side sectional view of the non-pneumatic tire of Figure 1 taken along the line 2-2;
Figure 3 is an enlargement of the left portion of the side cross sectional view of Figure 2 illustrating the relative radial extents of the inner and outer hoop portions and the central web of the tire;
Figure 4 is an enlarged side view of portion of the sidewall circled in phantom of the non-pneumatic illustrated in Figure 1;
Figure 5 is a perspective, sectional view of a second embodiment of the non-pneumatic of the invention illustrating in particular the reinforcing cables used to strengthen the annular reinforcing web of the tire, and
Figures 6A and 6B are comparative finite element analyses illustrating the amount of spoke bending experienced by the non-pneumatic tire without the annular reinforcing web vs. with the reinforcing web of the invention.

### DETAILED DESCRIPTION OF THE EMBODIMENTS

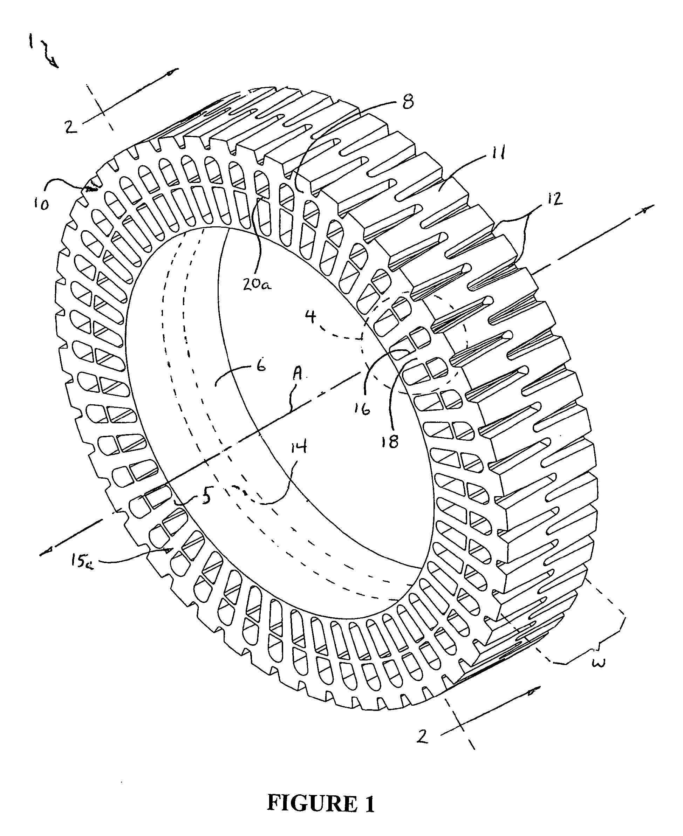

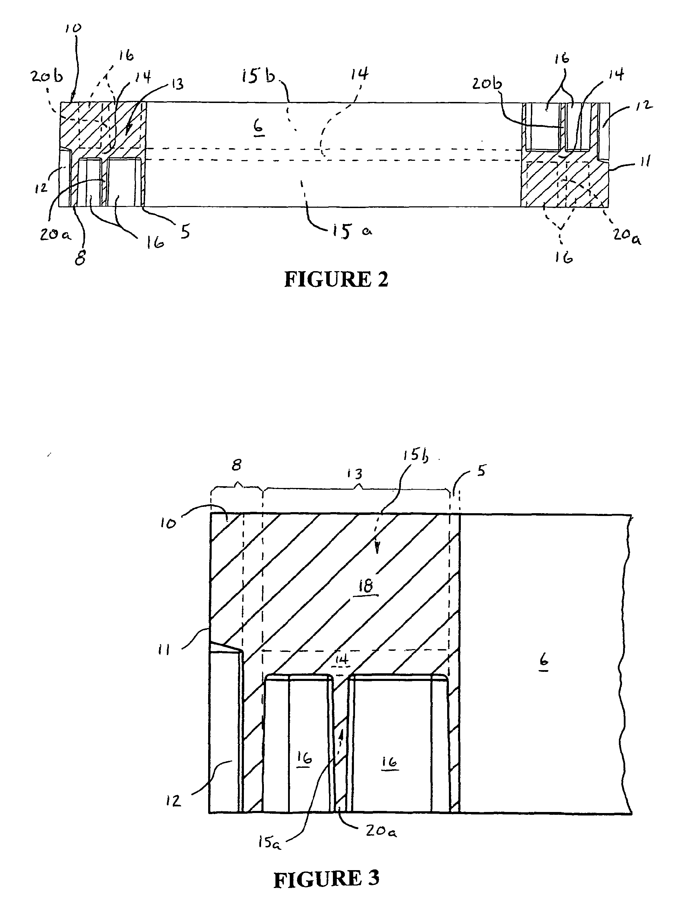

With reference now to Figures 1 and 2, wherein like numbers designate like components throughout all of the several Figures, the non-pneumatic tire 1 of the invention generally comprises an inner hoop member 5 having an inner surface 6, and an outer hoop member 8 having a tread groove region 10. Tread groove region 10 includes an outer surface 11 with treads 12 which in this example are parallel to the axis A of rotation of the tire 1. The treads 12 extend a little over half the width of the tire 1, and are staggered with respect to each other. Of course, any one of a number of tread patterns can be used in association with the invention. Inner and outer surfaces 6 and 11 define the inner and outer diameters of the tire 1, respectively.

With reference to Figures 1 and 3, a central web 13 integrally connects the inner and outer hoop members 5 and 8. The central web 13 includes a disc shaped mid portion 14 and side portions 15a, 15b. Side portions 15a, 15b include elongated, radially aligned cavities 16 that define elongated, radially aligned spokes 18.

Preferably, the width of the mid portion 14 of the central web 13 is between about 3% and 15% of the overall width W of the tire 1. Such a width is sufficient to provide a necessary amount of compressive strength of the tire while still providing enough resiliency to ensure a reasonably smooth ride. More preferably, the width of the mid portion 14 is between about 5% and 10% of the width W of the tire 1. The width of the web side portions 15a, 15b is equal to the complement of the width of the mid portion 14 of the central web 13. Accordingly, if the width of the mid portion 14 of the central web 13 is between about 5% and 10% of the overall width W of the tire 1, then the width of each of the side portions 15a, 15b is between about 47.5% and 45% of the width W of the tire. Both the depth of the radially aligned cavities 16 and the depth of the radially aligned spokes 18 correspond to the width of the web side portions 15a, 15b.

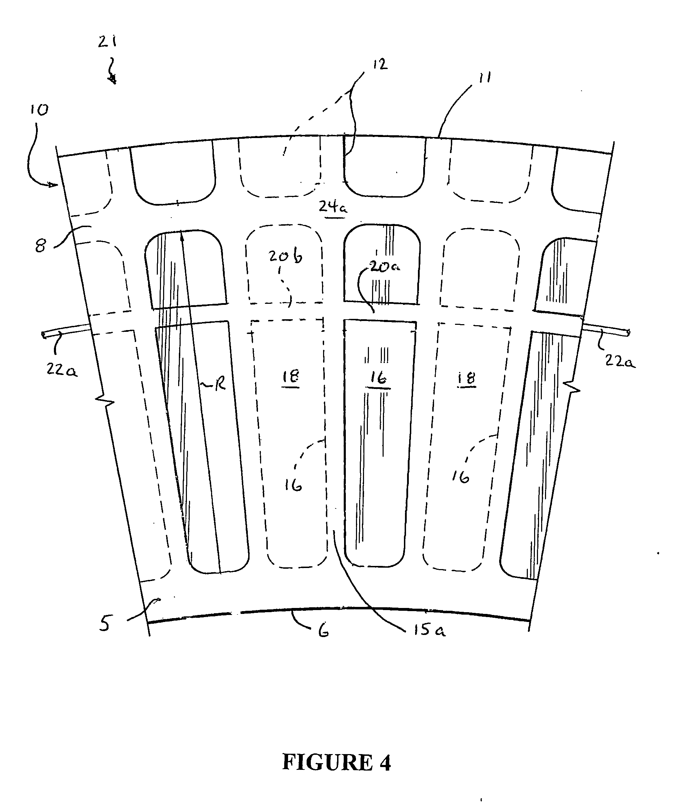

The spokes 18 are preferably uniformly bar-shaped as illustrated and uniformly spaced apart around the circumference of the tire 1 so as to provide uniform support around the outer surface 11 for compressive loads applied to the tire 1. The area of the bar-shaped spokes 18 is preferably between about 30% and 50% of the over-all area of the side portions 15a, 15b of the central web. Too little area would result in inadequate compressive strength around the side portions 15a, 15b of the central web, while too great an area would result in an excessively stiff tire that would not adequately absorb shock when traveling over an uneven surface. Moreover, the spoke length/width ratio, (the slenderness ratio) must be greater than 2.5 to allow buckling under extreme point loading e.g. tire running over an obstruction. The ratio of the radial length/width of the mid portion 14 of the central web 13 (i.e. slenderness ratio of the central web 14) should also be greater than 2.5. As is indicated in phantom in Figures 2 and 4, the spokes 18 are circumferentially staggered on either side of the tire 1 such that the spokes 18 of side portion 15a overlie the recesses 16 of side portion 15b. Such circumferential staggering or offsetting of the spokes 18 and recesses 16 ensures that every point along the circumference of the outer surface 11 of the tire 1 will be supported by at least one of the spokes 18 during a load-bearing operation.

The number of cavities 16, spokes 18, and treads 12 may vary depending on the configuration of tire 1. The tire 1 may have, for example, from 10 to 80 cavities, or more preferably from 25 to 60 cavities on each sidewall (twice as many in the overall tire). The tire 1 may similarly have, for example, from 10 to 80 spokes, or more preferably from 25 to 60 spokes on each sidewall (twice as many in the overall tire). The tire 1 optionally may also have from 0 to 320 treads, or more preferably 40 to 120 treads on each side of the tire 1 (twice as many in the overall tire). Embodiments with zero treads may be referred to as slick tires which lack a tread pattern. In one embodiment a tire has the same number of cavities, ribs and treads.

With reference now to Figures 1, 3 and 4, the non-pneumatic tire 1 is provided with annular reinforcing webs 20a, 20b on either side. Webs 20a, 20b integrally connect each spoke 18 to the spokes 18 on either side of it, thereby reinforcing the bending strength of each spoke 18. As best seen in Figure 4, the webs 20a, 20b are integrally connected to the spokes 18 at a point between about 55% and 80% of radial extent "R" as measured in the direction from the inner hoop member 5 to the outer hoop member 8, and are more preferably connected to the spokes 18 at a point between about 60% and 75% of the previously defined radial extent. As will be explained in more detail hereinafter, connecting the reinforcing webs 20a, 20b at such a point along the radial extent of the spokes 18 provides bending-resistant strength to the spokes 18 where it is needed most, which is the portion of the spoke extending toward the outer hoop member 8 where the spokes 18 are most apt to flex in response to a high compressive load.

The inner and outer hoop members 5 and 8, the central web 13, the spokes 18 and the annular reinforcing webs 20a, 20b are all preferably integrally connected in the manner indicated in Figures 1-3. Specifically, the disc shaped mid portion 14 of the central web 13 is integrally connected to both the inner and outer hoop members 5 and 18 and the spokes 18, and the annular reinforcing webs 20a, 20b are integrally connected to both the disc shaped mid portion 14 and the sides of each of the spokes 18. Such a structure lends considerable strength to the annular reinforcing webs 20a and 20b, and can be realized by well known polymer spin casting or molding processes.

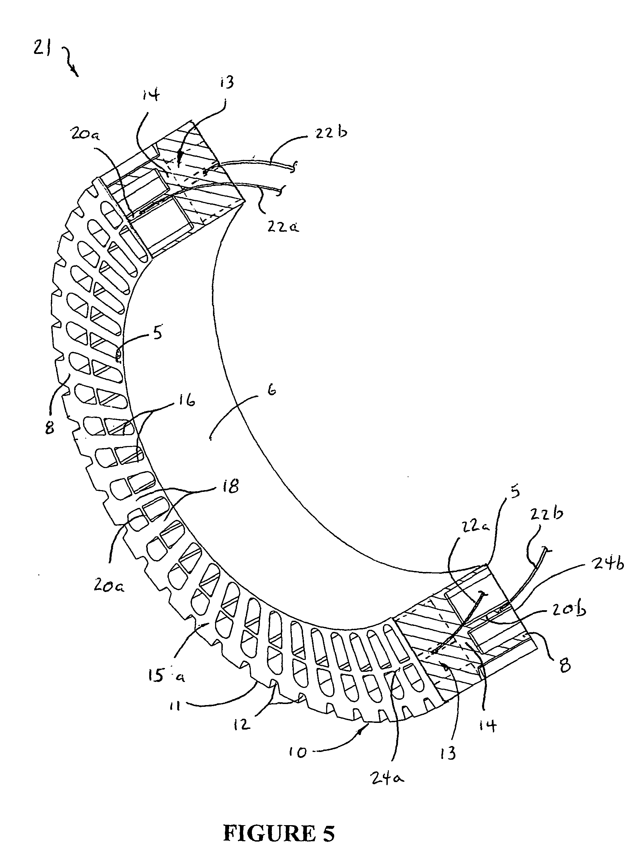

Figures 4 and 5 illustrates an alternative embodiment of the tire 21 of the invention, in which reinforcing fiber webbings in the form of circular cables 22a, 22b are integrated into the annular reinforcing webs 20a and 20b. These cables 22a, 22b may be formed from woven fibers of nylon, aramid, polyester, carbon or steel, and are preferably positioned near the outer edges of the annular reinforcing webbings 20a, 20b adjacent to the sidewalls 24a, 24b of the tire 21. The applicants have observed that the maximum tensile forces applied to the reinforcing webbings 20a, 20b occur nearest the sidewalls 24a, 24b of the tire 21, and so the positioning of the cables 22a, 22b near the outer edges of the tire 21 provides added tensile strength to the webbings 20a, 20b where it is needed most. While the reinforcing fiber webbings are illustrated as being circular cables 22a, 22b in this example, such webbings can take virtually any form and still be within the scope of the present invention. For example, an unwoven fiber roving can be integrated directly into the reinforcing webbings 20a, 20b throughout their entire widths. The strengthening of the reinforcing webbings 20a, 20b need not be accomplished solely by the integration of fiber webbings. For example, solid metal straps or bands may be incorporated into the reinforcing webbings 20a, 20b. Alternatively, the reinforcing webbings 20a, 20b may be formed from a different polymer composition having superior tensile strength properties over the polymer composition forming the rest of the tire 21.

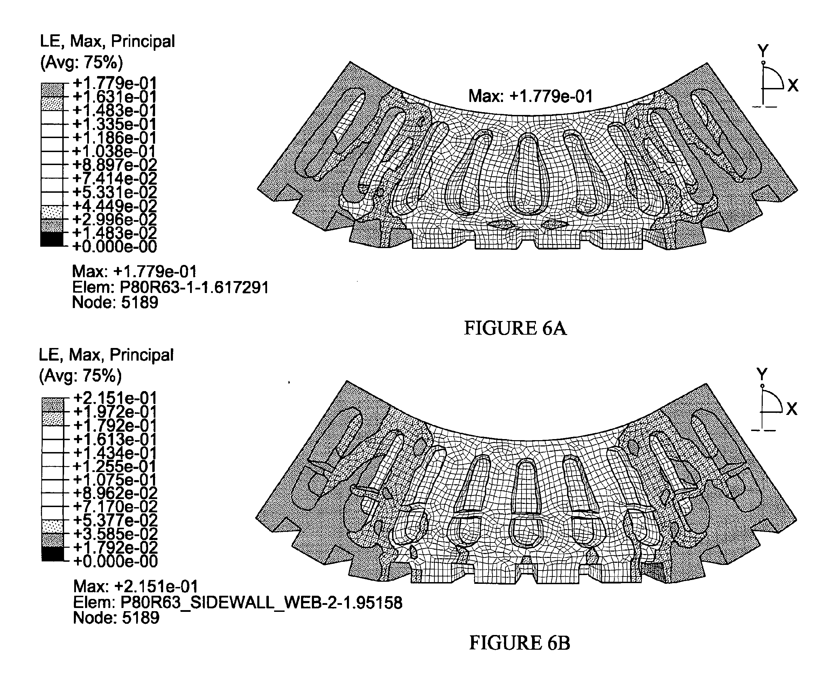

Figures 6A and 6B are comparative finite element analyses illustrating the amount of spoke bending experienced by the non-pneumatic tire without the annular reinforcing web vs. with the reinforcing web of the invention. Generally speaking, a comparison between Figures 6A and 6B demonstrates that that the annular reinforcing web 20 reduces the bending deflection of the spokes 18 while increasing their compressive deflection. The consequent reduction of bending deflection increases the load-bearing capability of the tire, which in turn allows a tire of a same size and load bearing capability to be made with between about 10%-15% less material. Such material reduction may be accomplished by reducing the width of the spokes 18 which, by increasing the area/volume ratio of the spokes, increases their ability to dissipate internal heat generated by flexing. Material may also be removed by reducing the thickness of the mid portion 14 of the center web 13 which also improves the resiliency of the tire. In this particular example, overall radial deflection increased between the Figure 6A tire relative to the 6B tire from 2.15 inches to 3.47 inches while the maximum principal stress stayed approximately the same while the maximum principal strains increased modestly from 12% to 18%. This increase in radial deflection increases the "footprint" or area contact between the tire and the ground, which advantageously decreases the contact pressure of the tire against the ground from 178 psi to 126 psi. Such a reduction in contact pressure reduces the mechanical fatigue experienced by the tire during operation, and increases its lifetime. Reduced contact pressure also provides a softer and more resilient ride, thereby protracting the life of the vehicle suspension and shock absorbers.

The tire 1 is preferably integrally formed from a polymer such as polyurethane. The polyurethane may be a reaction product of a diisocyanate, polyol and a curative selected from the group consisting of polyol curatives or diamine curatives. Suitable diisocyanates are selected from the group consisting of diphenylmethane diisocyanate (MDI), toluene diisocyanate (TDI), para-phenylene diisocyanate (PPDI), 1,6-hexane diisocyanate (HDI), isophorone diisocyanate (IPDI), 3,3'-bitoluene diisocyanate (TODI), 1,4-cyclohexyl diisocyanate (CHDI), naphthalene-1,5-diisocyanate (NDI), and methylene bis (p-cyclohexyl isocyanate) (H₁₂MDI). Suitable polyols are selected from the group consisting of polycaprolactone, polyester, poly(adipate) glycol, poly(hexamethylene adipate) glycol, poly(ethylene adipate) glycol, poly(diethylene adipate) glycol, poly(ethylene/propylene adipate) glycol, poly(oxypropylene)-poly(oxyethylene) glycol, poly(trimethylolpropane/hexamethylene adipate) glycol, poly(ethylene/butylene adipate) glycol, poly(butylene adipate) glycol, poly(hexamethylene/neopentyl adipate) glycol, poly(butylene/hexamethylene adipate) glycol (PBHAG), poly(neopentyl adipate) glycol, poly(tetramethylene ether) glycol (PTMEG), polyether, and polyalkyleneether polyols. Suitable curatives are selected from the group consisting of 4,4'-methylene-bis(2-chloroaniline) (MBCA); 4,4'-methylene-bis(3-chloro-2,6-diethylaniline (MCDEA); diethyl toluene diamine (DETDA; Ethacure™ 100 from Albemarle Corporation); tertiary butyl toluene diamine (TBTDA); dimethylthio-toluene diamine; trimethylene glycol di-p-amino-benzoate; methylene bis orthochloroaniline (MOCA), methylene bis diethylanaline (MDEA); methylenedianiline (MDA); MDA-sodium chloride complex; isobutyl 3,5-diamino-4-chlorobenzoate, ethylene glycol, diethylene glycol, dipropylene glycol, neopentyl glycol, 1,3-butanediol, 1,4-butanediol, hydroquinone-bis-hydroxyethyl ether (HQEE), and cyclohexyldimethanol (CHDM).

In use, the inner surface 6 of the tire 1 is preferably removably mountable to a rim or hub (not shown) of a vehicle wheel. For example, the tire 1 may be molded onto or adhered with an adhesive or bonding agent to a mounting ring, e.g., a metal mounting ring (not shown) which may slideably engage the rim or hub. Suitable mounting rings include those described in published US patent application US 2009-0211681 A1 assigned to Chemtura Corporation. Alternatively, the tire 1 may be molded onto or adhered to the rim or hub without using a mounting ring. For example the tire 1 may be pressed onto the rim which creates an interference fit when mounted such that the friction between the tire and rim holds the tire in place. The interference fit may also be created by heating the rim and band using torches or gas ovens and assembling into position while in their hot, expanded, freely sliding state. While cooling both parts are contracted back to their former size, except for the compression that results from the rim interfering with the band. It should be understood to those skilled in the art that tire 1 may be mounted to rim using a variety of other methods without departing from the scope of the present invention, as indicated in the appended claims.

The dimensions of tire 1 may be affected by various design parameters such as ground pressure (traction), vertical spring rate (ride), cornering power (handling), total deflection, material volume, and tire weight. Preferably, the outer diameter of the tire 1 is 60 inches (152 cm) or greater. However, the tire 1 may have an outer diameter ranging from 25 inches (64 cm) to 190 inches (483 cm), e.g. from 60 inches (152 cm) to 159 inches (404 cm) or from 63 inches (160 cm) to 100 inches (254 cm). The tire 1 may have an inner diameter ranging from 20 inches (51 cm) to 140 inches (356 cm), e.g. from 30 inches (76 cm) to 110 inches (279 cm) or from 40 inches (102 cm) to 80 inches (203 cm). The width of the tire 1 across the tread groove region 10 may range from 15 inches (38 cm) to 70 inches (178 cm), e.g. from 20 inches (51 cm) to 59 inches (150 cm) or from 26 inches (66 cm) to 29 inches (74 cm). The radial extent of the sidewalls 24a, b may range from 2 inches (5 cm) to 110 inches (279 cm), e.g. from 5 inches (13 cm) to 80 inches (203 cm) or from 15 inches (38 cm) to 50 inches (127 cm). Each cavity 16 may have a depth ranging from 7 inches (17.5 cm) to 20 inches (51 cm), e.g. from 8 inches (20 cm) to 15 inches (38 cm) or from 10 inches (25 cm) to 13 inches (33 cm). Each spoke 18 may have a thickness ranging from 2 inches (5 cm) to 15 inches (38 cm), e.g. from 5 inches (13 cm) to 13 inches (33 cm) or from 8 inches (20 cm) to 11 inches (28 cm). The mid-portion 14 of the central web 13 may have a thickness ranging from 1 inch (2.5 cm) to 14 inches (36 cm), e.g. from 1.5 inches (3.75 cm) to 12 inches (30 cm) or from 2 inches (5 cm) to 10 inches (25 cm). Treads 12 may have a depth from 0.25 inches (1 cm) to 12 inches (30 cm), e.g. from 2 inches (5 cm) to 8 inches (20 cm) or from 2.5 inches (6 cm) to 8 inches (15 cm), and a lateral length of less than 30 inches (76 cm), e.g. less than 25 inches (64 cm) or less than 20 inches (51 cm).

The tire 1 of the present invention may support 20,000 to 200,000 lbs per tire (9,000 kg to 91,000 kg per tire), e.g. 40,000 to 150,000 lbs per tire (18,000 kg to 68,000 kg per tire) or 60,000 to 100,000 lbs per tire (27,200 kg to 45,400 kg per tire). The tire 1 of the present invention may support such weights when the vehicle is traveling at speeds in the range from 0 to 60 mph (0 to 97 km/hr), e.g. 5 to 40 mph (8 to 64 km/hr) or 20 to 30 mph (32 to 48 km/hr). Each of the tires 1 may weigh approximately 500 lbs (227 kg) to 15,000 lbs (6,804 kg), e.g., 2,000 lbs (907 kg) to 10,000 lbs (4,535 kg) or 6,000 lbs (2721 kg) to 8,000 lbs (3,629 kg).

While the invention has been described in detail with particular reference to certain preferred embodiments thereof, it will be understood that variations and modifications can be effected within the scope of the invention. For example, the spokes 18 do not necessarily need to be radially aligned, but may instead be angled up to about 50° with respect to the radius of the tire. Additionally, while the reinforcing web is illustrated as being continuously circular, it may instead have portions that connect different pairs of adjacent spokes at different radial distances with respect to the center of the tire such that the overall shape of the web is for example an oval, an ellipse or a discontinuous circle, oval or ellipse formed from segments of alternating radial distances. In the context of this application, a reinforcing web described as being "annular" encompasses not only a continuous, circular web, but all such ovular, elliptical and discontinuous variations. All such variations, modifications and additions are deemed to be within the scope of the invention, with is limited only by the claims appended hereto and their equivalents.

## Claims

1. A non-pneumatic tire (1), comprising an inner hoop member (5) having an inner surface (6) that defines an inner diameter of the tire and an outer hoop member (8) including a tread groove region (10) that defines an outer diameter of the tire, **characterized by**:
a central web (13) having a disc-shaped mid-portion (14) and side portions (15a, 15b), said control web (13) integrally connecting said inner and outer hoop members (5,8);
a plurality of elongated, radially aligned cavities (16) included in said side portions (15a, 15b) and being on either side of and integrally connected to said disc-shaped mid-portion (14) of said central web (13) that define a plurality of elongated, radially aligned spokes (18) connecting said inner and outer hoop members (5,8), and
a reinforcing web (20a,20b) on either side of and integrally connected to said disc-shaped mid-portion (14) of said central web (13) that integrally interconnects a central portion of each radially aligned spoke (18) to the radially aligned spoke (18) on either side of it,
wherein said reinforcing web (20a,20b) is annular, and is connected to the radially aligned spokes (18) at a point between 60% and 75% of their radial extent as measured in the direction from said inner to the outer hoop member (5,8).

2. The non-pneumatic tire (1) defined in claim 1, wherein said annular web (20a,20b) includes a material (22a,22b) having a higher tensile strength than the material forming the rest of the tire.

3. The non-pneumatic tire (1) defined in claim 2, wherein said annular web (20a,20b) includes reinforcing webbing (22a,22b).

4. The non-pneumatic tire (1) defined in claim 3, wherein said reinforcing webbing (22a,22b) includes a pair of annular cables (22a,22b) integrated into the annular web (20a,20b) adjacent to the side walls of the tire.

5. The non-pneumatic tire (1) defined in any one of claims 1 to 4, wherein said inner and outer hoop members (5,8), said central web (13), said spokes (18) and said annular web (20a,20b) are all integrally formed from a polymer composition.

6. The non-pneumatic tire (1) defined in claim 5, wherein said polymer composition is polyurethane.

7. The non-pneumatic tire (1) defined in any one of claims 1 to 6, wherein spokes (18) on either side of the central web (13) of the tire are staggered with respect to one another.

8. A non-pneumatic tire (1), comprising an inner hoop member (5) having an inner surface (6) that defines an inner diameter of the tire and an outer hoop member (8) having a tread groove region (10) that defines an outer diameter of the tire, **characterized by**:
a central web (13) having side portions (15a, 15b) and a disc-shaped mid-portion (14) that is between 15% and 5% of a width of said tire that integrally connects said inner and outer hoop members (5,8);
a plurality of elongated, radially aligned cavities (16) included in said side portions (15a, 15b) and being on either side of and integrally connected to said disc-shaped mid-portion (14) of said central web (13) that define a plurality of elongated, radially aligned spokes (18) connecting said inner and outer hoop members (5,8), and
a reinforcing web (20a,20b) on either side of and integrally connected to said disc-shaped mid-portion (14) of said central web (13) that integrally interconnects a central portion of each radially aligned spoke (18) to the radially aligned spoke (18) on either side of it,
wherein said reinforcing web (20a,20b) is annular, and is connected to the radially aligned spokes (18) at a point between 60% and 75% of their radial extent as measured in the direction from said inner to the outer hoop member (5,8).

9. The non-pneumatic tire (1) defined in claim 8, wherein said inner and outer hoop members (5,8), said central web (13), said spokes (18) and said annular web (20a,20b) are all integrally formed from a polymer composition.

10. The non-pneumatic tire (1) defined in claim 9, wherein said polymer composition is polyurethane.

11. The non-pneumatic tire (1) defined in in one of claims 8 to 10, wherein spokes (18) on either side of the central web (13) of the tire are staggered with respect to one another.

12. The non-pneumatic tire (1) defined in one of claims 8 to 11, wherein said annular web (20a,20b) includes reinforcing webbing (22a,22b).

13. The non-pneumatic tire (1) defined in claim 12, wherein the reinforcing webbing (22a,22b) comprises a pair of annular cables integrated into the annular web (20a,20b) adjacent to the side walls of the tire.

14. The non-pneumatic tire (1) defined in claim 13, wherein the annular cables are formed from one or more of nylon, aramid, polyester, carbon and steel.

15. The non-pneumatic tire (1) defined in one of claims 8 to 14, wherein an area of said spokes (18) on either side of said central web (13) of said tire is between 30% and 50% of an area of the sidewall of said tire.

## Patentansprüche

1. Nichtluftreifen (1), der ein inneres Reifenelement (5) mit einer inneren Oberfläche (6), die einen Innendurchmesser des Reifens definiert, und ein äußeres Reifenelement (8) mit einem Laufflächenrillenbereich (10), der einen Außendurchmesser des Reifens definiert, umfasst, gekennzeichnet durch:
ein Mittelgewebe (13), das einen scheibenförmigen Mittelabschnitt (14) und Seitenabschnitte (15a, 15b) besitzt, wobei das Mittelgewebe (13) das innere und das äußere Reifenelement (5, 8) einteilig miteinander verbindet;
mehrere lang gestreckte, radial ausgerichtete Hohlräume (16), die in den Seitenabschnitten (15a, 15b) enthalten sind und sich beiderseits des scheibenförmigen Mittelabschnitts (14) des Mittelgewebes (13) befinden und damit einteilig verbunden sind und mehrere lang gestreckte, radial ausgerichtete Speichen (18) definieren, die das innere und das äußere Reifenelement (5, 8) verbinden, und
ein Verstärkungsgewebe (20a, 20b) beiderseits des scheibenförmigen Mittelabschnitts (14) des Mittelgewebes (13), das damit einteilig verbunden ist und einen Mittelabschnitt jeder radial ausgerichteten Speiche (18) einteilig mit der radial ausgerichteten Speiche (18) zu ihren beiden Seiten verbindet,
wobei das Verstärkungsgewebe (20a, 20b) ringförmig ist und mit den radial ausgerichteten Speichen (18) an einem Punkt im Bereich von 60 % bis 75 % ihrer radialen Erstreckung, gemessen in der Richtung von dem inneren zu dem äußeren Reifenelement (5, 8), verbunden ist.

2. Nichtluftreifen (1) nach Anspruch 1, wobei das ringförmige Gewebe (20a, 20b) ein Material (22a, 22b) aufweist, das eine höhere Zugfestigkeit als das den Rest des Reifens bildende Material besitzt.

3. Nichtluftreifen (1) nach Anspruch 2, wobei das ringförmige Gewebe (20a, 20b) ein Verstärkungsbandmaterial (22a, 22b) enthält.

4. Nichtluftreifen (1) nach Anspruch 3, wobei das Verstärkungsbandmaterial (22a, 22b) ein Paar ringförmiger Korde (22a, 22b) enthält, die in das ringförmige Gewebe (20a, 20b) neben den Seitenwänden des Reifens integriert sind.

5. Nichtluftreifen (1) nach einem der Ansprüche 1 bis 4, wobei das innere und das äußere Reifenelement (5, 8), das Mittelgewebe (13), die Speichen (18) und das ringförmige Gewebe (20a, 20b) alle einteilig aus einer Polymerzusammensetzung gebildet sind.

6. Nichtluftreifen (1) nach Anspruch 5, wobei die Polymerzusammensetzung Polyurethan ist.

7. Nichtluftreifen (1) nach einem der Ansprüche 1 bis 6, wobei die Speichen (18) beiderseits des Mittelgewebes (13) des Reifens relativ zueinander versetzt sind.

8. Nichtluftreifen (1), der ein inneres Reifenelement (5) mit einer inneren Oberfläche (6), die einen Innendurchmesser des Reifens definiert, und ein äußeres Reifenelement (8) mit einem Laufflächenrillenbereich (10), der einen Außendurchmesser des Reifens definiert, umfasst, gekennzeichnet durch:
ein Mittelgewebe (13), das Seitenabschnitte (15a, 15b) und einen scheibenförmigen Mittelabschnitt (14), der sich im Bereich von 15 % bis 5 % einer Breite des Reifens befindet und das innere und das äußere Reifenelement (5, 8) einteilig verbindet, besitzt;
mehrere lang gestreckte, radial ausgerichtete Hohlräume (16), die in den Seitenabschnitten (15a, 15b) enthalten sind und sich beiderseits des scheibenförmigen Mittelabschnitts (14) des Mittelgewebes (13) befinden und damit einteilig verbunden sind und mehrere lang gestreckte, radial ausgerichtete Speichen (18) definieren, die das innere und das äußere Reifenelement (5, 8) verbinden, und
ein Verstärkungsgewebe (20a, 20b) beiderseits des scheibenförmigen Mittelabschnitts (14) des Mittelgewebes (13), das damit einteilig verbunden ist und einen Mittelabschnitt jeder radial ausgerichteten Speiche (18) mit der radial ausgerichteten Speiche (18) beiderseits davon einteilig verbindet,
wobei das Verstärkungsgewebe (20a, 20b) ringförmig ist und mit den radial ausgerichteten Speichen (18) an einem Punkt im Bereich von 60 % bis 75 % ihrer radialen Erstreckung, gemessen in der Richtung von dem inneren zu dem äußeren Reifenelement (5, 8), verbunden ist.

9. Nichtluftreifen (1) nach Anspruch 8, wobei das innere und das äußere Reifenelement (5, 8), das Mittelgewebe (13), die Speichen (18) und das ringförmige Gewebe (20a, 20b) alle einteilig aus einer Polymerzusammensetzung gebildet sind.

10. Nichtluftreifen (1) nach Anspruch 9, wobei die Polymerzusammensetzung Polyurethan ist.

11. Nichtluftreifen (1) nach einem der Ansprüche 8 bis 10, wobei die Speichen (18) beiderseits des Mittelgewebes (13) des Reifens relativ zueinander versetzt sind.

12. Nichtluftreifen (1) nach einem der Ansprüche 8 bis 11, wobei das ringförmige Gewebe (20a, 20b) ein Verstärkungsbandmaterial (22a, 22b) enthält.

13. Nichtluftreifen (1) nach Anspruch 12, wobei das Verstärkungsbandmaterial (22a, 22b) ein Paar ringförmiger Korde umfasst, die in das ringförmige Gewebe (20a, 20b) neben den Seitenwänden des Reifens integriert sind.

14. Nichtluftreifen (1) nach Anspruch 13, wobei die ringförmigen Korde aus Nylon und/oder Aramid und/oder Polyester und/oder Kohlenstoff und/oder Stahl gebildet sind.

15. Nichtluftreifen (1) nach einem der Ansprüche 8 bis 14, wobei ein Bereich der Speichen (18) beiderseits des Mittelgewebes (13) des Reifens 30 % bis 50 % eines Bereichs der Seitenwand des Reifens ausmacht.

## Revendications

1. Pneu non pneumatique (1) comprenant un organe de cerceau interne (5) ayant une surface interne (6) qui définit un diamètre intérieur du pneu et un organe de cerceau externe (8) comportant une région de gorge de bande de roulement (10) qui définit un diamètre extérieur du pneu, **caractérisé par** :
une nappe centrale (13) ayant une portion centrale en forme de disque (14) et des portions latérales (15a, 15b), ladite nappe centrale (13) reliant intégralement lesdits organes de cerceau interne et externe (5, 8) ;
une pluralité de cavités allongées (16), alignées radialement, incluses dans lesdites portions latérales (15a, 15b) et étant disposées de chaque côté de ladite portion centrale en forme de disque (14) de ladite nappe centrale (13) en étant reliées intégralement à celle-ci, lesquelles définissent une pluralité de rayons allongés (18), alignés radialement, reliant lesdits organes de cerceau interne et externe (5, 8), et
une nappe de renforcement (20a, 20b) de chaque côté de ladite portion centrale en forme de disque (14) de ladite nappe centrale (13) et connectée intégralement à celle-ci, laquelle relie intégralement une portion centrale de chaque rayon aligné radialement (18) au rayon aligné radialement (18) de chaque côté de celle-ci, ladite nappe de renforcement (20a, 20b) étant annulaire, et étant connectée aux rayons alignés radialement (18) en un point situé entre 60 % et 75 % de leur étendue radiale tel que mesuré dans la direction depuis ledit organe de cerceau interne (5) vers ledit organe de cerceau externe (8).

2. Pneu non pneumatique (1) selon la revendication 1, dans lequel ladite nappe annulaire (20a, 20b) comporte un matériau (22a, 22b) ayant une résistance à la traction supérieure à celle du matériau formant le reste du pneu.

3. Pneu non pneumatique (1) selon la revendication 2, dans lequel ladite nappe annulaire (20a, 20b) comporte une sangle de renforcement (22a, 22b).

4. Pneu non pneumatique (1) selon la revendication 3, dans lequel ladite sangle de renforcement (22a, 22b) comporte une paire de câbles annulaires (22a, 22b) intégrés dans la nappe annulaire (20a, 20b) en position adjacente aux parois latérales du pneu.

5. Pneu non pneumatique (1) selon l'une quelconque des revendications 1 à 4, dans lequel lesdits organes de cerceau interne et externe (5, 8), ladite nappe centrale (13), lesdits rayons (18) et ladite nappe annulaire (20a, 20b) sont tous formés intégralement à partir d'une composition polymère.

6. Pneu non pneumatique (1) selon la revendication 5, dans lequel ladite composition polymère est du polyuréthane.

7. Pneu non pneumatique (1) selon l'une des revendications 1 à 6, dans lequel les rayons (18) de chaque côté de la nappe centrale (13) du pneu sont décalés les uns par rapport aux autres.

8. Pneu non pneumatique (1) comprenant un organe de cerceau interne (5) ayant une surface interne (6) qui définit un diamètre intérieur du pneu et un organe de cerceau externe (8) comportant une région de gorge de bande de roulement (10) qui définit un diamètre extérieur du pneu, **caractérisé par** :
une nappe centrale (13) ayant des portions latérales (15a, 15b) et une portion centrale en forme de disque (14) qui constitue entre 15 % et 5 % d'une largeur dudit pneu qui relie intégralement lesdits organes de cerceau interne et externe (5, 8) ;
une pluralité de cavités allongées (16), alignées radialement, incluses dans lesdites portions latérales (15a, 15b) et étant disposées de chaque côté de ladite portion centrale en forme de disque (14) de ladite nappe centrale (13) en étant reliées intégralement à celle-ci, lesquelles définissent une pluralité de rayons allongés (18), alignés radialement, reliant lesdits organes de cerceau interne et externe (5, 8), et
une nappe de renforcement (20a, 20b) de chaque côté de ladite portion centrale en forme de disque (14) de ladite nappe centrale (13) et connectée intégralement à celle-ci, laquelle relie intégralement une portion centrale de chaque rayon aligné radialement (18) au rayon aligné radialement (18) de chaque côté de celle-ci,
ladite nappe de renforcement (20a, 20b) étant annulaire, et étant connectée aux rayons alignés radialement (18) en un point situé entre 60 % et 75 % de leur étendue radiale tel que mesuré dans la direction depuis ledit organe de cerceau interne (5) vers ledit organe de cerceau externe (8).

9. Pneu non pneumatique (1) selon la revendication 8, dans lequel lesdits organes de cerceau interne et externe (5, 8), ladite nappe centrale (13), lesdits rayons (18) et ladite nappe annulaire (20a, 20b) sont tous formés intégralement à partir d'une composition polymère.

10. Pneu non pneumatique (1) selon la revendication 9, dans lequel ladite composition polymère est du polyuréthane.

11. Pneu non pneumatique (1) selon l'une des revendications 8 à 10, dans lequel les rayons (18) de chaque côté de la nappe centrale (13) du pneu sont décalés les uns par rapport aux autres.

12. Pneu non pneumatique (1) selon l'une des revendications 8 à 11, dans lequel ladite nappe annulaire (20a, 20b) comporte une sangle de renforcement (22a, 22b).

13. Pneu non pneumatique (1) selon la revendication 12, dans lequel la sangle de renforcement (22a, 22b) comprend une paire de câbles annulaires intégrés dans la nappe annulaire (20a, 20b) en position adjacente aux parois latérales du pneu.

14. Pneu non pneumatique (1) selon la revendication 13, dans lequel les câbles annulaires sont formés d'un ou plusieurs parmi le nylon, l'aramide, le polyester, le carbone et l'acier.

15. Pneu non pneumatique (1) selon l'une des revendications 8 à 14, dans lequel une zone desdits rayons (18) de chaque côté de ladite nappe centrale (13) dudit pneu est comprise entre 30 % et 50 % d'une zone de la paroi latérale dudit pneu.
